# EUROPEAN PATENT APPLICATION

(11) **EP 4 379 915 A1**
(43) Date of publication of application: **05.06.2024**
(21) Application number: 23209924.2
(22) Date of filing: 14.11.2023
(51) Int. Cl.: H01M 50/107, H01M 50/152, H01M 50/179, H01M 50/342

(54) **SECONDARY BATTERY**

(30) Priority: 30.11.2022 KR 20220164289
(71) Applicant: Samsung SDI Co., Ltd., Yongin-si, Gyeonggi-do 17084 (KR)
(72) Inventor: Park, Jong Jun, 17084 Yongin-si, Gyeonggi-do, (KR); Kim, Dae Kyu, 17084 Yongin-si, Gyeonggi-do (KR); Seo, Kwang Soo, 17084 Yongin-si, Gyeonggi-do, (KR)
(74) Representative: Gulde & Partner

(57) **Abstract**

A secondary battery includes an electrode assembly; a case that accommodates the electrode assembly; and a cap assembly that is coupled to an upper portion of the case, the cap assembly including a cap up, a safety vent below the cap up, and a cap down below the safety vent and electrically connected to the electrode assembly, wherein the safety vent includes a main notch and a sub-notch adjacent to the main notch, and the sub-notch has a depth that is smaller than a depth of the main notch.

## Description

### BACKGROUND

### 1. Field

Embodiments relate to a secondary battery.

### 2. Description of the Related Art

Unlike a primary battery that cannot be charged, a secondary battery is a battery that can be charged and discharged. Low-capacity batteries may be used in portable small electronic devices such as smart phones, feature phones, tablet computers, notebook computers, digital cameras, or camcorders, and large-capacity batteries may be used as power sources for driving motors in hybrid vehicles, electric vehicles, or power storage devices. Lithium ion secondary batteries may be classified into cylindrical, prismatic and pouch-type secondary batteries in terms of shape.

A cylindrical lithium ion secondary battery may include a cylindrical electrode assembly, a cylindrical case accommodating the electrode assembly, an electrolyte in the case to facilitate movement of lithium ions, and a cap assembly which is coupled to one side of the case to help prevent electrolyte leakage and help prevent separation of the electrode assembly. The cap assembly may include a safety vent that may be broken when the internal pressure of the case is higher than a set pressure.

### SUMMARY

The embodiments are realized by providing a secondary battery including an electrode assembly; a case that accommodates the electrode assembly; and a cap assembly that is coupled to an upper portion of the case, the cap assembly including a cap up, a safety vent below the cap up, and a cap down below the safety vent and electrically connected to the electrode assembly, wherein the safety vent includes a main notch and a sub-notch adjacent to the main notch, and the sub-notch has a depth that is smaller than a depth of the main notch. The depth may be measured from the deepest point of the notch.

A distance between the main notch and the sub-notch may be 0.5 mm to 2 mm. The distance may be a distance between a center (a part that has the biggest depth) of the main notch and that of the sub-notch. The distance may be preferably 1 mm to 2 mm, more preferably 1,2 mm to 1,7 mm. The distance may be 1,5mm.

The depth of the sub-notch may be 10% to 90% of the depth of the main notch. The depth of the sub-notch may be preferably 20% to 80% of the depth of the main notch, more preferably 30% to 70%. Further, the depth of the sub-notch may be 40% to 60% of the depth of the main notch. Or, the depth of the sub-notch may may be 50% of the depth of the main notch.

A distance from a central portion of the safety vent to the main notch may be 8 mm to 12 mm. The distance from a central portion of the safety vent to the main notch may be preferably 9 mm to 11 mm, more preferably 10mm.

The sub-notch may be at an inner side of the main notch.

A distance between the main notch and the sub-notch may be 1 mm to 2 mm. The distance may be preferably 1,2 mm to 1,7 mm. The distance may be 1,5mm.

The sub-notch may be at an outer side of the main notch.

A distance between the main notch and the sub-notch may be 0.5 mm to 2 mm. The distance may be preferably 1 mm to 2 mm, more preferably 1,2 mm to 1,7 mm. The distance may be 1,5mm.

In a secondary battery, the case is at the outmost of the battery. The terms "inner" and "outer" may be defined in view of the distance from the case. For example, the expression "at an inner side of the main notch" may mean that farther from case than the main notch.

The main notch and the sub-notch may be in the form of concentric circles.

The sub-notch may include a plurality of notches circumferentially spaced apart from each other in the form of a circle.

The safety vent may further include a central portion at a center of the safety vent, a first planar portion that extends outwardly from the central portion; a first bent portion that is bent from the first planar portion and extends upwardly; a second planar portion that extends outwardly from the first bent portion and is in contact with a lower surface of the cap up; a second bent portion that is bent from the second planar portion and extends upwardly; and an extending portion that extends inwardly from the second bent portion and is in contact with an upper surface of the cap up. The term "outwardly from the central portion" may mean closer to the case than the central portion.

The second battery, the cap assembly is at the upmost of the battery. The term "upwardly" may mean towards the cap assembly.

The main notch and the sub-notch may be on the first planar portion and are adjacent to the first bent portion.

The depth of the main notch may be 53% to 77% of a thickness of the first planar portion. The depth of the main notch may be preferably 58% to 72% of a thickness of the first planar portion, more preferably 63% to 67% of a thickness of the first planar portion. The depth of the main notch may be 658% a thickness of the first planar portion.

The depth of the sub-notch may be 5% to 70% of a thickness of the first planar portion. The depth of the sub-notch may be preferably 15% to 60% of a thickness of the first planar portion, more preferably 25% to 50% of a thickness of the first planar portion. Further, the depth of the sub-notch may be 35% to 40% of a thickness of the first planar portion.

A thickness of the central portion may be greater than a thickness of the first planar portion.

The cap down may include a first region that is electrically connected to the central portion of the safety vent, and a second region that extends outwardly from the first region and is electrically connected to the electrode assembly, and a thickness of the first region may be smaller than a thickness of the second region.

### BRIEF DESCRIPTION OF DRAWINGS

Features will be apparent to those of skill in the art by describing in detail exemplary embodiments with reference to the attached drawings in which:
FIG. 1 is a cross-sectional view showing a secondary battery according to an embodiment of the present disclosure.
FIG. 2 is a cross-sectional view showing a cap assembly in a secondary battery according to an embodiment of the present disclosure.
FIG. 3 is an enlarged cross-sectional view of a portion of the cap assembly of FIG. 2.
FIG. 4 is a cross-sectional view showing a portion of a cap assembly according to an embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or element, it can be directly on the other layer or element, or intervening layers may also be present. Further, it will be understood that when a layer is referred to as being "below" another layer, it can be directly below, or one or more intervening layers may also be present. In addition, it will also be understood that when a layer is referred to as being "between" two layers, it can be the only layer between the two layers, or one or more intervening layers may also be present. Like reference numerals refer to like elements throughout.

In addition, it will be understood that when an element A is referred to as being "connected to" an element B, the element A can be directly connected to the element B or an intervening element C may be present therebetween such that the element A and the element B are indirectly connected to each other. As used herein, the terms "or" and "and/or" are not exclusive terms, and include any and all combinations of one or more of the associated listed items.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms that the terms "include," "comprise," "including," and "comprising," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms, e.g., these terms are not intended to imply or require sequential inclusion. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

In addition, when a part is said to be electrically coupled to another part, this includes not only a case where it is directly connected but also a case where it is connected with another element interposed therebetween.

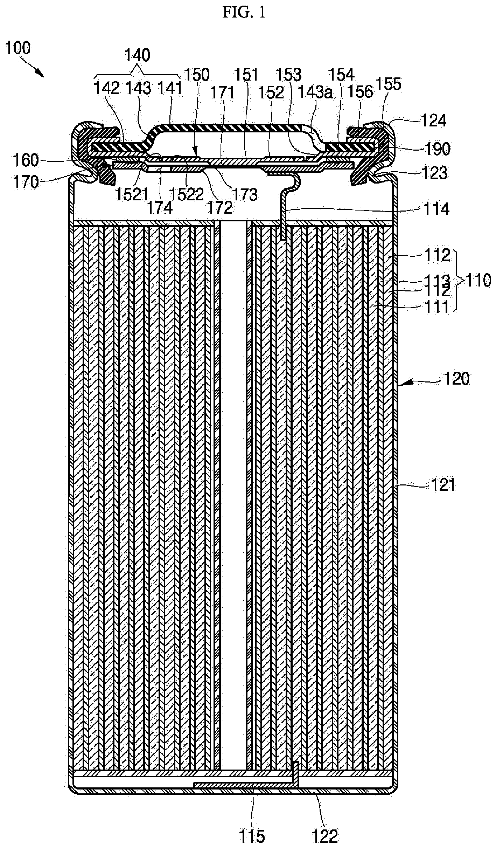

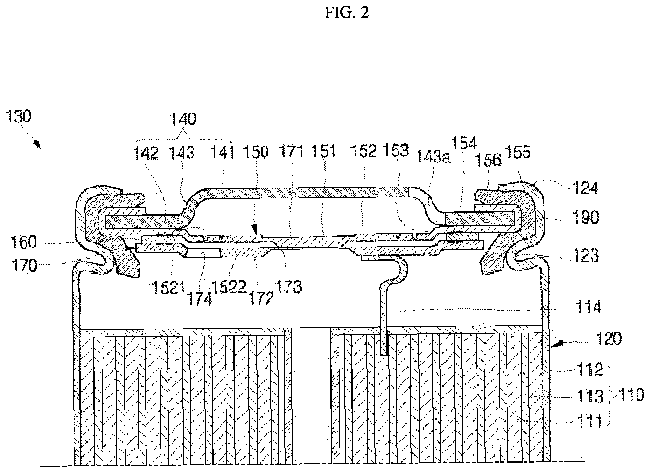

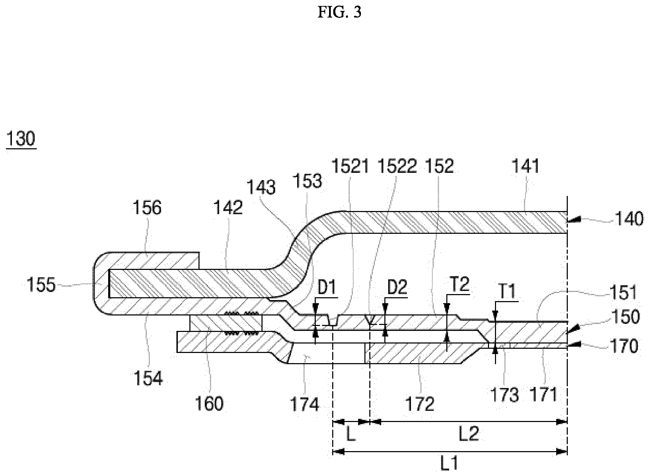

FIG. 1 is a cross-sectional view showing a secondary battery according to an embodiment of the present disclosure. FIG. 2 is a cross-sectional view showing a cap assembly in a secondary battery according to an embodiment of the present disclosure. FIG. 3 is an enlarged cross-sectional view of a portion of the cap assembly of FIG. 2.

FIGS. 1 to 3, a secondary battery 100 according to an embodiment of the present disclosure may include an electrode assembly 110, a case 120, a cap assembly 130, and a gasket 190.

The electrode assembly 110 may include a first electrode 111 and a second electrode 112 and a separator 113 between the first electrode 111 and the second electrode 112. The electrode assembly 110 may be formed by winding a laminate of the first electrode 111, the separator 113, and the second electrode 112 in a jelly-roll shape. In an implementation, the first electrode 111 may act as a positive electrode, and the second electrode 112 may act as a negative electrode. A first electrode tab 114 may be connected to the cap assembly 130 at the top of the electrode assembly 110, and a second electrode tab 115 may be connected to a bottom plate 122 of the case 120 at the bottom.

The first electrode 111 may be formed by applying a first electrode active material (e.g., a transition metal oxide) to a first electrode current collector (e.g., formed of a metal foil such as aluminum). A first electrode uncoated portion to which the first electrode active material is not applied may be on the first electrode 111, and the first electrode tab 114 may be attached to the first electrode uncoated portion. One end of the first electrode tab 114 may be electrically connected to the first electrode 111, and the other end thereof may protrude upwardly from the electrode assembly 110 and may be electrically connected to the cap assembly 130.

The second electrode 112 may be formed by applying a second electrode active material (e.g., graphite or carbon) to a second electrode current collector (e.g., formed of a metal foil such as copper or nickel). An uncoated portion of the second electrode to which the second electrode active material is not applied may be on the second electrode 112, and the second electrode tab 115 may be attached to the uncoated portion of the second electrode. One end of the second electrode tab 115 may be electrically connected to the second electrode 112, and the other end thereof may protrude downwardly from the electrode assembly 110 and may be electrically connected to the bottom plate 122 of the case 120.

The separator 113 may be between the first electrode 111 and the second electrode 112 to help prevent a short circuit and to facilitate the movement of lithium ions. The separator 113 may be made of, e.g., polyethylene, polypropylene, or a composite film of polyethylene and polypropylene.

The case 120 may include a side plate which is a cylindrical body having a predetermined diameter so as to form a space in which the electrode assembly 110 is accommodated, and a bottom plate 122 that seals a lower portion of the side plate. The top opening of the case 120 may be sealed after inserting the electrode assembly 110 thereinto. In an implementation, a beading part 123 (e.g., for preventing the movement of the electrode assembly 110) may be on the upper portion of the case 120. In an implementation, a crimping part 124 (for fixing the cap assembly 130 and a gasket 190) may be at the uppermost end of the case 120. The crimping part 124 has the gasket 190 therein and may press the cap assembly 130 to help prevent separation of the cap assembly 130 and leakage of an electrolyte.

The cap assembly 130 may include a cap up 140, a safety vent 150, an insulator 160, and a cap down 170.

The cap up 140 may have a circular plate body shape, and may include a terminal part 141 protruding convexly and upwardly in the center, a coupling part 142 on an outer periphery of the terminal part 141, and a connection part 143 connecting the terminal part 141 and the coupling part 142. The terminal part 141 may protrude upwardly relative to the coupling part 142 (e.g., away from the electrode assembly 110) and may serve as a terminal to be electrically connected to an external circuit or load. The terminal part 141 may be electrically connected to the first electrode tab 114 and may function as, e.g., a positive electrode. The coupling part 142 may be on the outer periphery of the terminal part 141, and the safety vent 150 may be coupled to the coupling part 142. In an implementation, the coupling part 142 may have a smaller thickness than the terminal part 141. In an implementation, the coupling part 142 may help prevent the cap up 140 from being deformed when the crimping part 124 is formed to couple the cap assembly 130 to the case 120. An extending portion 156 of the safety vent 150 may be coupled to an upper portion of the coupling part 142. The connection part 143 may connect the terminal part 141 and the coupling part 142 and may be inclined. A gas discharge hole 143a may be in the connection part 143. In an implementation, a plurality of gas discharge holes 143a may be in the connection part 143 and may provide a path through which gas generated inside the case 120 may be discharged. In an implementation, a portion of the gas discharge hole 143a may extend to the terminal part 141 and the coupling part 142.

The safety vent 150 may have a circular plate body shape corresponding to the cap up 140 and may be coupled to the lower portion of the cap up 140. The safety vent 150 may include a central portion 151, a first planar portion 152, a first bent portion 153, a second planar portion 154, a second bent portion 155, and the extending portion 156.

The central portion 151 may be at the center of the safety vent 150. The cap down 170 may be electrically connected to a lower surface of the central portion 151. A thickness T1 of the central portion 151 may be greater than thicknesses of other regions of the safety vent 150. In an implementation, the central portion 151 may help prevent the safety vent 150 from being deformed during welding with the cap down 170.

The first planar portion 152 may extend outwardly from the central portion 151. A thickness T2 of the first planar portion 152 may be smaller than the thickness T1 of the central portion 151. The first planar portion 152 may be spaced apart from the cap down 170. The first planar portion 152 may include a main notch 1521 and a sub-notch 1522 (e.g., for guiding breakage of the safety vent 150).

The main notch 1521 may be on an upper surface of the first planar portion 152. The main notch 1521 may be adjacent or proximate to the first bent portion 153 in the first planar portion 152. In an implementation, the main notch 1521 may be at a position corresponding to (e.g., overlying) the gas discharge hole 174 of the cap down 170. In an implementation, the main notch 1521 may be broken by gas discharged through the gas discharge hole 174.

A depth D1 of the main notch 1521 may vary in various manners according to the thickness of the first planar portion 152. The depth D1 of the main notch 1521 may be about 53% to about 77% of the thickness T2 of the first planar portion 152. If the depth D1 of the main notch 1521 were to be less than 53% of a thickness D of the first planar portion 152, the main notch 1521 may not be broken by the internal gas. If the depth D1 of the main notch 1521 were to be greater than 77% of the thickness T2 of the first planar portion 152, the main notch 1521 could be (e.g., prematurely or unintentionally) broken even with a small impact.

The sub-notch 1522 may be adjacent to the main notch 1521. The sub-notch 1522 may be in an inward direction from or on an inward side of the main notch 1521. The sub-notch 1522 may help induce breakage of the safety vent 150 together with the main notch 1521. The sub-notch 1522 may be adjacent to the main notch 1521, so that the safety vent 150 may be broken at the same pressure even if it is relatively shallow compared to the depth D1 of the main notch 1521. In an implementation, e.g., compared to when there is only a main notch (single notch), when the sub-notch 1522 is included adjacent to the main notch 1521 (e.g., double notch), the main notch 1521 may have a smaller depth, thereby reducing the risk of cracking of the safety vent 150 and preventing deformation.

A distance L between the main notch 1521 and the sub-notch 1522 (e.g., between a center of the main notch 1521 and a center of the sub-notch 1522) may be about 1 mm to about 2 mm. If the distance L between the main notch 1521 and the sub-notch 1522 were to be less than 1 mm, the main notch 1521 and the sub-notch 1522 may be too close to each other, the sub-notch 1522 could be deformed during breakage, and the deformed sub-notch 1522 could affect the breaking shape of the main notch 1521, so that the operation of the main notch 1521 could be hindered. In addition, if the distance L between the main notch 1521 and the sub-notch 1522 were to be greater than 2 mm, during breaking, the main notch 1521 could be additionally deformed after the sub-notch 1522 is deformed and thus, the function of the sub-notch 1522 could be rendered moot.

A distance L1 from the center of the safety vent 150 to the main notch 1521 may be about 8 mm to about 12 mm. A distance L2 from the center of the safety vent 150 to the sub-notch 1522 may vary according to the distance L1 of the main notch 1521. The main notch 1521 and the sub-notch 1522 may be in the form of concentric circles. In an implementation, the main notch 1521 and the sub-notch 1522 may each be one continuous notch (e.g., surrounding the center of the safety vent 150). In an implementation, the sub-notch 1522 may include notches spaced apart from each other on a circumference having the same diameter (e.g., may form a dashed-line circle).

A depth D2 of the sub-notch 1522 may be about 5% to about 70% of the thickness T2 of the first planar portion 152. In an implementation, the depth D2 of the sub-notch 1522 may be smaller than the depth D1 of the main notch 1521.

In an implementation, the depth D2 of the sub-notch 1522 may be about 10% to 90% of the depth D1 of the main notch 1521. If the depth D2 of the sub-notch 1522 were to be less than about 10% of the depth D1 of the main notch 1521, there could be little deformation of the sub-notch 1522 when the main notch 1521 breaks. The sub-notch 1522 may not play a role of helping the main notch 1521. If the depth D2 of the sub-notch 1522 were to be greater than about 90% of the depth D1 of the main notch 1521, there could be a risk of the sub-notch 1522 breaking earlier than the main notch 1521 at a pressure lower than the set pressure.

The first bent portion 153 may be bent from the first planar portion 152 and may extend upwardly. The first bent portion 153 may be inclined. The first bent portion 153 may connect the first planar portion 152 and the second planar portion 154.

The second planar portion 154 may extend outwardly from the first bent portion 153. The second planar portion 154 may be higher (e.g., farther from the electrode assembly 110) than the first planar portion 152. In an implementation, the first planar portion 152 and the second planar portion 154 may not be on the same plane. An upper surface of the second planar portion 154 may contact (e.g., directly contact) a lower surface of the coupling part 142 of the cap up 140, and a lower surface of the second planar portion 154 may contact (e.g., directly contact) the insulator 160. In an implementation, a portion of the second planar portion 154 may contact (e.g., directly contact) the gasket 190.

The second bent portion 155 may be bent from the second planar portion 154 and may extend upwardly. The second bent portion 155 may extend vertically from the second planar portion 154. The second bent portion 155 may contact (e.g., directly contact) an end of the coupling part 142 of the cap up 140. The second bent portion 155 may be between the coupling part 142 and the gasket 190.

The extending portion 156 may extend inwardly from the second bent portion 155. The extending portion 156 may contact (e.g., directly contact) the upper surface of the coupling part 142 of the cap up 140. The extending portion 156 may contact (e.g., directly contact) the gasket 190. In an implementation, the extending portion 156 may be welded to the coupling part 142 of the cap up 140.

The insulator 160 may be between (e.g., outer ends of) the safety vent 150 and the cap down 170. In an implementation, the insulator 160 may insulate the (e.g., outer ends of) safety vent 150 and the cap down 170 from each other. In an implementation, the insulator 160 may have a ring shape and may be between the second planar portion 154 of the safety vent 150 and the outer periphery of the cap down 170. The insulator 160 may be made of a resin material, e.g., polyethylene (PE), polypropylene (PP), or polyethylene terephthalate (PET).

The cap down 170 may have a circular plate body shape. The cap down 170 may include a first region 171 electrically connected to the central portion 151 of the safety vent 150 and a second region 172 extending outwardly from the first region 171. The first region 171 may have a smaller thickness than the second region 172. In an implementation, the first region 171 may be separated from the second region 172 by the gas generated inside the case 120. In an implementation, a center hole 173 may be between the first region 171 and the second region 172. The center hole 173 may provide a path for discharging internal gas and at the same time, the first region 171 may be easily separated from the second region 172. In an implementation, the center hole 173 may include a plurality of holes spaced apart from each other between the first region 171 and the second region 172. In an implementation, the center hole 173 may be a "C" shaped hole. In an implementation, the center hole 173 may not completely separate the first region 171 and the second region 172.

The first electrode tab 114 may be electrically connected to the lower surface of the second region 172. In an implementation, a gas discharge hole 174 may be in the second region 172. The gas discharge hole 174 may provide a path for discharging internal gas if excessive internal pressure were to be generated inside the case 120. In an implementation, the central portion 151 of the safety vent 150 may be raised by the gas discharged through the gas discharge hole 174, and the first region 171 of the cap down 170 may be separated from the second region 172, thereby electrically separating the safety vent 150 from the cap down 170. Next, the main notch 1521 or the sub-notch 1522 of the safety vent 150 may be broken, so that internal gas may be discharged through the gas discharge hole 143a of the cap up 140.

The gasket 190 may be in the upper opening of the case 120. In an implementation, the gasket 190 may be assembled between and contact (e.g., directly contact) the outer periphery of the cap up 140 and the safety vent 150 and the upper opening of the case 120. The gasket 190 may contact (e.g., directly contact) the second planar portion 154, the second bent portion 155, and the extending portion 156 of the safety vent 150. The gasket 190 may be made of a resin material, e.g., polyethylene (PE), polypropylene (PP), or polyethylene terephthalate (PET). The gasket 190 may electrically insulate the case 120 and the cap assembly 130 from each other.

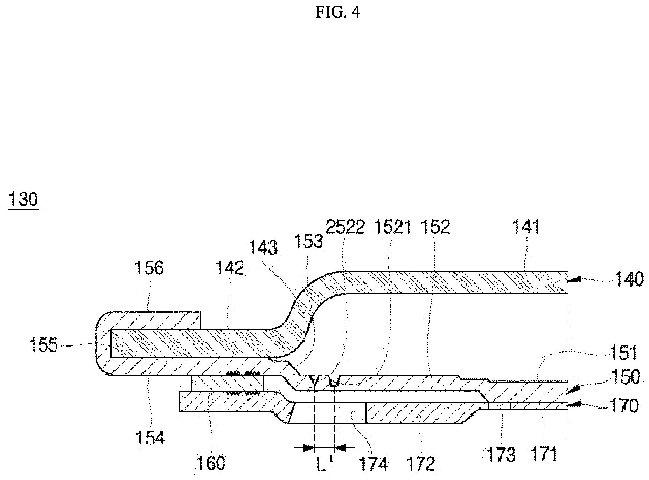

FIG. 4 is a cross-sectional view showing a portion of a cap assembly according to an embodiment of the present disclosure.

Referring to FIG. 4, the safety vent 250 may include a main notch 1521 and a sub-notch 2522 in the first planar portion 152. The sub-notch 2522 may be outside (e.g., at an outer side of) the main notch 1521.

A distance L' between the main notch 1521 and the sub-notch 2522 may be about 0.5 mm to about 1 mm. If the distance L' between the main notch 1521 and the sub-notch 2522 were to be less than 0.5 mm, the main notch 1521 and the sub-notch 2522 could be too close to each other, the sub-notch 2522 could be deformed during breakage, and the deformed sub-notch 2522 could adversely affect the breaking shape of the main notch 1521, so that the operation of the main notch 1521 could be hindered. If the distance L' between the main notch 1521 and the sub-notch 2522 were to be greater than 1 mm, deformation of the sub-notch 2522 could start at a point in time when breaking of the main notch 1521 is finished, so the sub-notch 2522 may not contribute to the breaking role of the main notch 1521 and formation of a shallow depth.

The sub-notch 2522 may be identical to the sub-notch 1522 in terms of shape except for being outside the main notch 1521, and a duplicate description thereof may be omitted.

As described above, in the secondary battery according to the embodiment of the present disclosure, the depth of the main notch may be reduced by including a sub-notch at a portion adjacent to the main notch. Accordingly, the safety of the secondary battery may be improved while maintaining the desired breaking pressure of the safety vent.

One or more embodiments may provide a secondary battery capable of improving safety by including a main notch having a relatively small depth while maintaining a desired breaking pressure of a safety vent.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A secondary battery (100), comprising:
an electrode assembly (110);
a case (120) that accommodates the electrode assembly (110); and
a cap assembly (130) that is coupled to an upper portion of the case (120), the cap assembly (130) including a cap up (140), a safety vent (150, 250) below the cap up (140), and a cap down (170) below the safety vent (150, 250) and electrically connected to the electrode assembly (110),
wherein:
the safety vent (150, 250) includes a main notch (1521) and a sub-notch (1522, 2522) adjacent to the main notch (1521), and
the sub-notch (1522, 2522) has a depth that is smaller than a depth of the main notch (1521).

2. The secondary battery (100) as claimed in claim 1, wherein a distance between the main notch (1521) and the sub-notch (1522, 2522) is 0.5 mm to 2 mm.

3. The secondary battery (100) as claimed in claim 1 or 2, wherein the depth of the sub-notch (1522, 2522) is 10% to 90% of the depth of the main notch (1521).

4. The secondary battery (100) as claimed in any of the preceding claims, wherein a distance from a central portion (151) of the safety vent (150, 250) to the main notch (1521) is 8 mm to 12 mm.

5. The secondary battery (100) as claimed in any of the preceding claims, wherein the sub-notch (1522) is at an inner side of the main notch (1521).

6. The secondary battery (100) as claimed in any claims 1 to 5, wherein the sub-notch (2522) is at an outer side of the main notch (1521).

7. The secondary battery (100) as claimed in any of the preceding claims, wherein the main notch (1521) and the sub-notch (1522, 2522) are in the form of concentric circles.

8. The secondary battery (100) as claimed in any of claims 1 to 6, wherein the sub-notch (1522, 2522) includes a plurality of notches circumferentially spaced apart from each other in the form of a circle.

9. The secondary battery (100) as claimed in any of claims 1 to 6, wherein each of the main notch (1521) and the sub-notch (1522) is one continuous notch.

10. The secondary battery (100) as claimed in any of the preceding claims, wherein the safety vent (150, 250) further includes:
a central portion (151) at a center of the safety vent (150, 250),
a first planar portion (152) that extends outwardly from the central portion (151);
a first bent portion (153) that is bent from the first planar portion (152) and extends upwardly;
a second planar portion (154) that extends outwardly from the first bent portion (153) and is in contact with a lower surface of the cap up (140);
a second bent portion (155) that is bent from the second planar portion (154) and extends upwardly; and
an extending portion (156) that extends inwardly from the second bent portion (155) and is in contact with an upper surface of the cap up (140).

11. The secondary battery (100) as claimed in claim 10, wherein the main notch (1521) and the sub-notch (1522, 2522) are on the first planar portion (152) and are adjacent to the first bent portion (153).

12. The secondary battery (100) as claimed in claim 10 or 11, wherein the depth of the main notch (1521) is 53% to 77% of a thickness of the first planar portion (152).

13. The secondary battery (100) as claimed in any of claim 10 to 12,
wherein the depth of the sub-notch (1522, 2522) is 5% to 70% of a thickness of the first planar portion (152).

14. The secondary battery (100) as claimed in any of claim 10 to 13,
wherein a thickness of the central portion (151) is greater than a thickness of the first planar portion (152).

15. The secondary battery (100) as claimed in any of claim 9 to 14, wherein:
the cap down (170) includes:
a first region (171) that is electrically connected to the central portion (151) of the safety vent (150, 250), and
a second region (172) that extends outwardly from the first region (171) and is electrically connected to the electrode assembly (110), and
a thickness of the first region (171) is smaller than a thickness of the second region (172).
